# EUROPEAN PATENT SPECIFICATION

(11) **EP 3 300 161 B1**
(45) Date of publication and mention of the grant of the patent: **30.12.2020**
(21) Application number: 16872105.8
(22) Date of filing: 14.07.2016
(51) Int. Cl.: H01M 10/44, H02J 7/04, H01M 10/613, H01M 10/623, H02J 7/00, H02J 50/10, H02J 7/02, H01M 10/42, H01M 10/0525, G04G 19/06

(54) **CHARGING CONTROL METHOD AND APPARATUS FOR WEARABLE ELECTRONIC DEVICE, AND SMART WATCH**
LADESTEUERUNGSVERFAHREN UND -VORRICHTUNG FÜR AM KÖRPER TRAGBARE ELEKTRONISCHE VORRICHTUNG UND INTELLIGENTE UHR
PROCÉDÉ ET APPAREIL DE COMMANDE DE CHARGE POUR UN DISPOSITIF ÉLECTRONIQUE PORTABLE ET MONTRE INTELLIGENTE

(30) Priority: 09.12.2015 CN 201510907791
(43) Date of publication of application: 28.03.2018
(73) Proprietor: Goertek Inc., Hi-Tech Industry District Weifang, Shandong 261031 (CN)
(72) Inventor: MENG, Xin, Weifang Shandong 261031 (CN); HOU, Zenan, Weifang Shandong 261031 (CN); LI, Xinghua, Weifang Shandong 261031 (CN)
(74) Representative: Qip Patentanwälte Dr. Kuehn & Partner mbB
(86) International application number: PCT/CN2016/089983
(87) International publication number: WO 2017/096906

(56) References cited:
- EP-A1- 2 705 877
- WO-A1-2009/031639
- WO-A1-2015/184098

## Description

### TECHNICAL FIELD

The present disclosure relates to the technical field of wearable electronic devices, and specifically to a charging control method and apparatus for a wearable electronic device, and a smart watch.

### BACKGROUND

The wireless charging technology in the field of consumer electronics is mainly on the basis of the WPC (Qi) Standard. Qi is a "wireless charging" standard presented by Wireless Power Consortium (for short, WPC), which is the globally first standardization organization that promotes wireless charging technology, and possesses two main characteristics of convenience and versatility. The Qi Standard employs "electromagnetic induction technology". The charging efficiency of the wireless charging method on the basis of the "electromagnetic induction technology" has a positive correlation with the power of the devices. Wearable electronic devices (for example smart watches), because of the generally relatively small battery capacities limited by device sizes, have small powers, which results in that when smart watches are wirelessly charged, the charging efficiency is relatively low. The low charging efficiency results in the following problem when the wireless charging technology is applied in smart watches: the charging temperature is too high, and heat is generated when charging.

On one hand, too high temperature will affect the battery life, and on the other hand, because wearable devices directly contact with skin, too high temperature scalds skin, or makes the wearer uncomfortable, which causes poor user experience, and thus reduces the user stickiness to the products.

A traditional solution regarding the problem, such as employing techniques of heat conduction, heat dissipation and so on, results in increasing cost and is hard to spread. Another traditional solution, such as temporarily stopping the charging when the charging temperature is too high, will cause the problem of too long charging duration, prolonging the overall charging duration, which also results in poor user experience.

EP 2 705 877 A1 discloses an implant current controlled battery charging based on temperature. WO 2009/031 639 A1 discloses a non-contact charge type accumulator. WO 2015/184 098 A1 discloses a wireless charging device for an electronic device.

### SUMMARY

In order to solve the above problems, the present disclosure provides a charging control method and apparatus for a wearable electronic device, and a smart watch, which solves the problem that in the process of wireless charging of wearable devices, heating results in too high temperature, and also avoids the problems of too long charging duration and high cost caused by traditional means for reducing the temperature.

According to an aspect of the present disclosure, there is provided a charging control method for a wearable electronic device, the method comprising:
setting a temperature range when the wearable electronic device is being charged according to a user demand;
when the charging starts, turning on a wirelessly receiving coil of the wearable electronic device, and using the wirelessly receiving coil to generate a charging current for charging the wearable electronic device;
when it is monitored that a value of the charging current of the wearable electronic device rises to a set constant-current charging current value, acquiring in real time a temperature value of the wearable electronic device; and
judging whether the temperature value is within the temperature range; and if yes, maintaining the present value of the charging current of the wearable electronic device; and if not, changing the value of the charging current of the wearable electronic device, and thus changing the temperature value of the wearable electronic device, so that the temperature value of the wearable electronic device is within the temperature range;
wherein the temperature range is the range between a set temperature upper limit value and a set temperature lower limit value, and the changing the value of the charging current of the wearable electronic device comprises:
   when the temperature value of the wearable electronic device is higher than the upper limit value of the temperature range, controlling to reduce all at once or reduce progressively for multiple times the value of the charging current of the wearable electronic device, so that the temperature value monitored in real time is less than or equal to the temperature lower limit value; and
   when the temperature value of the wearable electronic device is less than or equal to the lower limit value of the temperature range, controlling to increase the value of the charging current of the wearable electronic device;
   wherein the method further comprises setting a duration threshold; and
   the controlling to reduce all at once or reduce progressively for multiple times the value of the charging current of the wearable electronic device, so that the temperature value monitored in real time is less than or equal to the temperature lower limit value comprises:
      setting one or more level current reducing controlling coefficients, and generating a current reducing controlling instruction for present use according to a corresponding level current reducing controlling coefficient;
      sending the current reducing controlling instruction to a processing chip that controls the wirelessly receiving coil, to cause the processing chip to reduce a voltage numerical value of a current and power pin, thereby reducing the value of the charging current of the wearable electronic device;
      controlling to reduce the value of the charging current of the wearable electronic device according to the present current reducing controlling instruction, so that the wearable electronic device is charged according to the current value that has been reduced;
      timing from the time point when the value of the charging current of the wearable electronic device is reduced, to obtain a present current reducing duration; and
      if when the present current reducing duration is equal to the preset duration threshold, the temperature value monitored in real time is still within the temperature range, according to current reducing controlling coefficient of a next level that are used in a next level, generating a current reducing controlling instruction of a next level, and controlling to continue to reduce the value of the charging current of the wearable electronic device.

According to another aspect of the present disclosure, there is provided a charging control apparatus for a wearable electronic device, the apparatus comprising:
a temperature range setting unit, for setting a temperature range when the wearable electronic device is being charged according to a user demand;
a coil controlling unit, for when the charging starts, turning on a wirelessly receiving coil of the wearable electronic device, and using the wirelessly receiving coil to generate a charging current for charging the wearable electronic device;
a temperature monitoring unit, for when it is monitored that a value of the charging current of the wearable electronic device rises to a set constant-current charging current value,
acquiring in real time a temperature value of the wearable electronic device;
a temperature judging unit, for judging whether the temperature value is within the temperature range; and
a current controlling unit, for according to a judgment result of the temperature judging unit, maintaining the present value of the charging current of the wearable electronic device; or, changing the value of the charging current of the wearable electronic device, and thus changing the temperature value of the wearable electronic device, so that the temperature value of the wearable electronic device is within the temperature range;
wherein the temperature range is the range between a set temperature upper limit value and a set temperature lower limit value;
the current controlling unit (905) is specifically for when the temperature value of the wearable electronic device is higher than the upper limit value of the temperature range, controlling to reduce all at once or reduce progressively for multiple times the value of the charging current of the wearable electronic device, so that the temperature value monitored in real time is less than or equal to the temperature lower limit value; and
when the temperature value of the wearable electronic device is less than or equal to the lower limit value of the temperature range, controlling to increase the value of the charging current of the wearable electronic device, and the controlling to increase the value of the charging current is to increase the present value of the charging current to the preset constant-current charging current value;
wherein the apparatus (90) further comprises: a duration threshold setting unit, for setting a duration threshold;
the current controlling unit (905) is further specifically for, setting one or more level current reducing controlling coefficients, and generating a current reducing controlling instruction for present use according to a corresponding level current reducing controlling coefficient;
sending the current reducing controlling instruction to a processing chip that controls the wirelessly receiving coil, to cause the processing chip to reduce a voltage numerical value of a current and power pin, thereby reducing the value of the charging current of the wearable electronic device;
controlling to reduce the value of the charging current of the wearable electronic device
according to the present current reducing controlling instruction, so that the wearable electronic device is charged according to the current value that has been reduced;
timing from the time point when the value of the electricity charging current of the wearable electronic device is reduced, to obtain a present current reducing duration; and
if when the present current reducing duration is equal to the duration threshold that is preset by the duration threshold setting unit, the temperature value that is in real time monitored by the temperature monitoring unit (903) is still within the temperature range, according to current reducing controlling coefficients of a next level that are used in a next level, generating a current reducing controlling instruction of a next level, and controlling to continue to reduce the value of the charging current of the wearable electronic device.

According to still another aspect of the present disclosure, there is provided a smart watch, wherein the smart watch is provided with the above charging control apparatus for a wearable electronic device, and the apparatus for controlling charging causes a temperature value of the smart watch when being charged in a wireless mode to be within a set temperature range.

The advantageous effects of the technical solutions of the present disclosure are: the technical solutions of the embodiments of the present disclosure preset the temperature range, and when the value of the charging current of the wearable electronic device rises to the preset constant-current charging current value, in real time monitor the temperature of the wearable electronic device, and according to the difference of the judgment results of the temperature value, employ different controlling measures. In especial when the temperature value of the wearable device exceeds the temperature range, the solution realizes the cooling by reducing the charging current. Compared with the traditional solution of adding heat conduction elements, the solution has lower cost, and is suitable for large-scale production. In addition, the solution in real time monitors the temperature value, and when the temperature is less than or equal to the temperature range, restores the current of the wearable electronic device, which enables to quickly charge the apparatus and shortens the charging duration. Compared with the conventional cooling solution of temporarily stopping the charging, the solution prolongs the battery life, thereby improving the user experience, and meanwhile realizing quick charging at near room temperature.

### BRIEF DESCRIPTION OF DRAWINGS

Fig. 1 is the schematic diagram of the charging curve of a lithium battery at room temperature;
Fig. 2 is the schematic diagram of the charging curve of a lithium battery at relatively high environment temperature or in an environment of poor heat dissipation;
Fig. 3 is the flow chart of a charging control method for a wearable electronic device of an embodiment of the present disclosure;
Fig. 4 is the schematic flow chart of the charging control method for a wearable electronic device provided by another embodiment of the present disclosure;
Fig. 5 is the schematic diagram of the charging curve of a lithium battery at relatively high environment temperature or in an environment of poor heat dissipation provided by another embodiment of the present disclosure;
Fig. 6 is the schematic diagram of the charging curve of a lithium battery at relatively high environment temperature or in an environment of poor heat dissipation provided by another embodiment of the present disclosure;
Fig. 7 is the schematic diagram of the charging curve of a lithium battery at relatively high environment temperature or in an environment of poor heat dissipation provided by another embodiment of the present disclosure;
Fig. 8 is the schematic diagram of the charging curve of a lithium battery at relatively high environment temperature or in an environment of poor heat dissipation provided by another embodiment of the present disclosure; and
Fig. 9 is the structural block diagram of a charging control apparatus for a wearable electronic device of an embodiment of the present disclosure.

### DETAILED DESCRIPTION

The technical concept of the present disclosure is: regarding the problems of the prior art, the embodiments of the present disclosure propose a solution of preventing too high temperature when charging and meanwhile ensuring quick charging. The method in real time monitors the temperature when the wearable electronic device is being charged (mainly to reach the preset constant-current charging current value), obtains the temperature value, and employs current controlling measures, so that the temperature value is maintained within the temperature range, wherein when the temperature value is higher than the temperature range, the embodiment reduces the value of the charging current of the wearable electronic device, and when the temperature value is below the temperature range, the embodiment increases the value of the charging current. Such a manner does not need to extra add heat conduction elements or heat dissipation elements, which saves the cost. What is more important is that, the technical solutions of the embodiments of the present disclosure do not generate too high temperature when charging, which does not affect the wearing comfort ability and the skin health of the user, do not need to stop the charging, and avoid the problem of overall too long charging duration that is caused by pausing charging to reduce the temperature in traditional solutions.

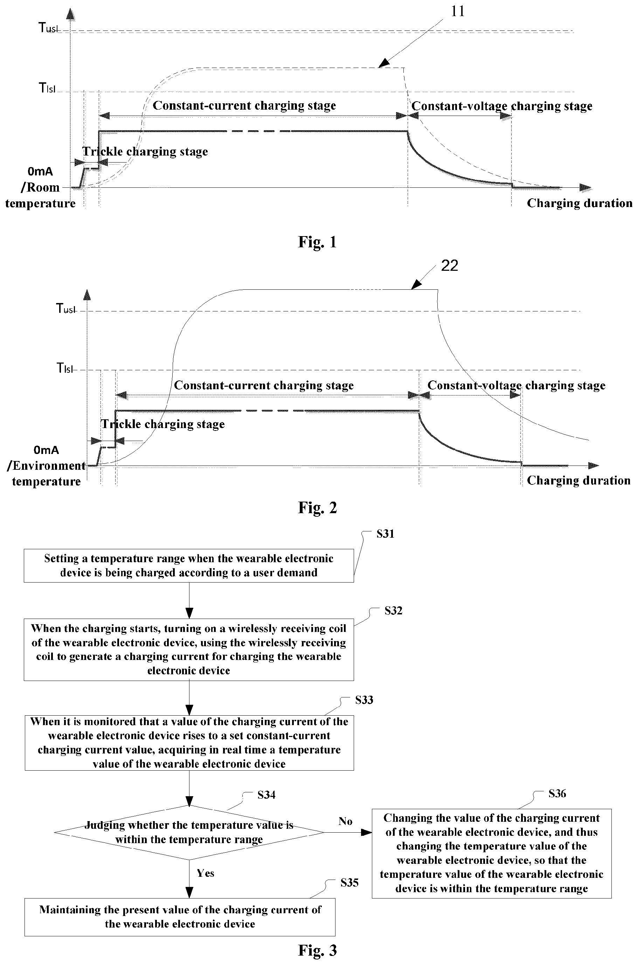

Fig. 1 is the schematic diagram of the charging curve of a lithium battery at room temperature. Fig. 2 is the schematic diagram of the charging curve of a lithium battery at relatively high environment temperature or in an environment of poor heat dissipation. Referring to Fig. 1 and Fig. 2, the vertical coordinate represents temperature, and the horizontal ordinate represents charging duration. In Fig. 1, the vertical coordinate Tᵤₛₗ is the upper limit value of the temperature that is tolerable by human body, and the vertical coordinate Tₗₛₗ is the temperature lower limit value that can ensure quick charging efficiency, and the temperature upper limit value and the temperature lower limit value define the temperature range. The charging process of the lithium battery of the wearable electronic device may be divided into generally four stages: trickle charging (low voltage precharging), constant-current charging (CC), constant-voltage charging (CV) and charging terminating. The constant-current charging (CC) is the high current stage of the four charging stages, in which the battery temperature rises very quickly. The typical charging duration-temperature curve at room temperature is as shown in Fig. 1, and the temperature in charging is within a reasonable range. The curve 11 in Fig. 1 is the illustrative temperature curve when a lithium battery is being charged. The safety precautions for common charging processes are not perfect, and when the temperature is too high, as shown in Fig. 2, as the prolong of the charging duration, the highest point of the temperature curve 22 has already exceeded the temperature upper limit value Tᵤₛₗ that is tolerable by human body. At this time, if the high current charging is continuously maintained, it is possible to scald the user, and even cause dangers such as battery burning and explosion. In addition, the high temperature charging condition for a long term will shorten the battery life, and affect the endurance power of the battery of wearable electronic devices.

### The first embodiment

In order to solve the problem that appears in Fig. 2, the embodiments of the present disclosure provide a charging control method for a wearable electronic device. Fig. 3 is the flow chart of a charging control method for a wearable electronic device of an embodiment of the present disclosure. Referring to Fig. 3, the charging control method for a wearable electronic device comprises the following steps:
Step S31, setting a temperature range when the wearable electronic device is being charged according to a user demand;
Step S32, when the charging starts, turning on a wirelessly receiving coil of the wearable electronic device, and using the wirelessly receiving coil to generate a charging current for charging the wearable electronic device;
Step S33, when it is monitored that a value of the charging current of the wearable electronic device rises to a preset constant-current charging current value, acquiring in real time a temperature value of the wearable electronic device; and
Step S34, judging whether the temperature value is within the temperature range; and if yes, executing Step S35, and maintaining the present value of the charging current of the wearable electronic device; and if not, executing Step S36, changing the value of the charging current of the wearable electronic device, and thus changing the temperature value of the wearable electronic device, so that the temperature value of the wearable electronic device is within the temperature range.

It can be known from the method shown in Fig. 3 that, the technical solutions of the present embodiment, in the process of the wireless charging of the wearable electronic device, when it is monitored that a value of the charging current of the wearable electronic device rises to a preset constant-current charging current value, acquire in real time a temperature value of the wearable electronic device, employ different controlling means according to the difference of the temperature value, so that when the wearable electronic device is being charged, the temperature is always within the preset temperature range, which accordingly avoids the problems of battery damage and affecting the wearing comfortability of the user that are caused by too high temperature, and avoids the problem of overall too long charging duration that is caused by the cooling technique of pausing charging, thereby increases the user usage experience and the competitive power of the products.

Specifically, by presetting the temperature range according to the usage demands of the user, it means that according to the different requirements of the users on the efficiency of quick charging of wearable electronic devices and the difference in the genders of the users (for example, the user is a male/female), different temperature ranges are set, to satisfy the personalization demands of the users. For example, according to the temperatures that are tolerable by human body, the temperature upper limit value takes a value within the range of 40-60□, and the temperature lower limit value takes a value within the range of 35-45 °C. For example, the temperature range is 37°C -52°C.

The implementation process of the charging control method for a wearable electronic device of the present embodiment will be specifically described by taking the example that the wearable electronic devices is a smart watch. It can be understood that, the application range of the technical solutions of the embodiments of the present disclosure is not limited to smart watch, and may also be a smart wristband or other wearable electronic devices. This type of electronic devices generally possesses the following characteristics: small power, wearability, and contacting with human skin when charging.

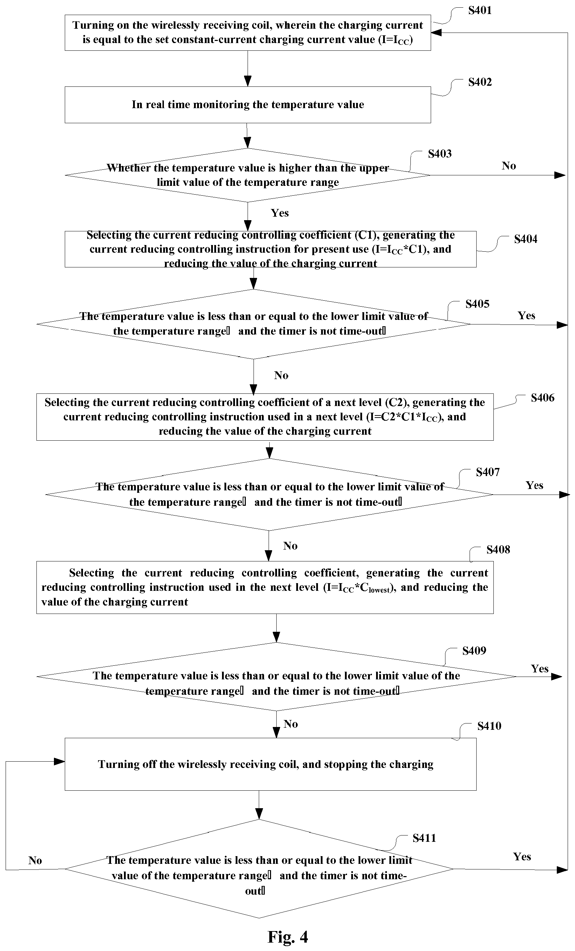

Fig. 4 is the schematic flow chart of the charging control method for a wearable electronic device provided by another embodiment of the present disclosure. As shown in Fig. 4, the flow starts, and executes the following Step S401 to Step S411.

Step S401, turning on the wirelessly receiving coil, the value of the charging current rising, and reaching the preset constant-current charging current value (I=I_{CC}), and entering Step S402.

When the smart watch needs wireless charging, the wirelessly receiving coil built-in in the smart watch is turned on, and use the wirelessly receiving coil to generate a charging current for charging the smart watch. The initial charging stage of the smart watch is the trickle charging stage, which is the low voltage precharging, wherein the current is relatively small, and the temperature at the time is not too high, so measures for reducing the temperature are not required. When the value of the charging current of the battery of the smart watch rises to the constant-current charging current value that is preset by the constant-current charging stage (that is, I=I_{CC}), start executing the corresponding operation of controlling to reduce the charging current according to the change of the temperature value.

Step S402, acquiring the real time temperature value of the battery of the smart watch, and after acquiring the real time temperature value, entering Step S403.

Specifically, by collecting in real time the voltage value of a thermistor that is electrically connected to the battery of the smart watch, calculating out a present resistance value of the thermistor according to the voltage value of the thermistor, and according to a correspondence relation between the resistance value and the temperature, the temperature value of the battery of the smart watch is obtained.

Step S403, judging whether the acquired present temperature value is higher than the upper limit value Tᵤₛₗ of the preset temperature range.

If not, it returns to Step S401, maintains the present value of the charging current, and continues to perform charging according to the preset constant-current charging current value. If yes, it changes the value of the charging current of the wearable electronic device; that is, when the present temperature value of the wearable electronic device is higher than the upper limit value of the temperature range, controls to reduce all at once or reduce progressively for multiple times the value of the charging current of the wearable electronic device. In the present embodiment, if the temperature value is higher than the upper limit value of the preset temperature range, execute Step S404.

Step S404, selecting the current reducing controlling coefficient (C1), generating the current reducing controlling instruction (I=I_{CC}^{∗}C1) for present use, and reducing the value of the charging current; and after the value of the charging current is reduced, entering Step S405.

In the present embodiment, the current reducing controlling instruction is sent to a processing chip that controls the wirelessly receiving coil, to cause the processing chip to reduce a voltage numerical value of a current and power pin, thereby reducing the value of the charging current of the smart watch. In other embodiments of the present disclosure, the current reducing controlling instruction can also be sent to the power supply side, and the electromagnetic wave signal of the wirelessly emitting coil is controlled by the power supply side, thereby reducing the value of the charging current of the smart watch, which is not limited.

The conventional wireless charging technology is realized mainly by using the electromagnetic induction principle; that is, using the energy coupling, between the wirelessly emitting coil (which can generate a magnetic field) in the electricity charger and the wirelessly receiving coil that is correspondingly provided in the smart watch, to realize the transfer of energy. On the basis of that, in the present embodiment, the current reducing controlling of the smart watch may specifically be implemented by a processing chip in the smart watch for controlling the wirelessly receiving coil, and may also be implemented by controlling the power supply side of the wirelessly emitting coil.

Step S405, judging whether the temperature value is less than or equal to the lower limit value of the temperature range and whether the timer is time-out; and if yes, returning to Step S401, controlling to increase the value of the charging current of the smart watch to the preset constant-current charging current I_{CC}; and if not, executing Step S406, selecting current reducing controlling coefficients (C1 and C2) for the next level, generating the current reducing controlling instruction that is used in a next level (I=C2^{∗}C1^{∗}I_{CC}), and further reducing the value of the charging current.

It should be noted that, in the embodiments of the present disclosure the lower limit value of the temperature range is set to serve as a suspending point for a reducing operation in the operation of reducing the value of the charging current in multiple-level current reducing controlling. That is, when it is monitored that the real time temperature value is less than or equal to the temperature lower limit value of the set temperature range, the operation of reducing the value of the charging current is stopped, so as to restore to an appropriate current value, and complete the charging as soon as possible.

It should be noted that, the relation between the temperature condition and the time condition in Step S405 is logical sum. That is, when the time condition is satisfied (the duration reaches the preset present duration threshold), further judge whether the temperature condition is satisfied, and if the temperature condition is also satisfied (that is, the temperature value is less than or equal to the lower limit value of the temperature range), control to increase the value of the charging current, so as to increase the temperature value. Here, the controlling to increase the value of the charging current may be increasing the present value of the charging current to the preset constant-current charging current value, which can ensure the charging efficiency of quick charging. If the temperature condition is not satisfied, that is, the temperature value is higher than the lower limit value of the temperature range, control to continue to reduce the present value of the charging current, that is, execute Step S406.

Step S406, selecting current reducing controlling coefficients (C1 and C2) of a next level, generating the current reducing controlling instruction that is used in a next level (I=C2^{∗}C1^{∗}I_{CC}), and reducing the value of the charging current; and after the value of the charging current is reduced, entering Step S407.

Step S407, judging whether the present temperature value is less than or equal to the lower limit value of the temperature range and whether the timer is not time-out; and if yes, returning to Step S401, and controlling to increase the present value of the charging current of the smart watch to the preset constant-current charging current value Ice; and if not, entering Step S408.

In Step S407, the result of the comparison, between the temperature value of the lithium battery acquired in real time after the current reduction of Step S406 and the temperature lower limit value, is judged, and if the temperature value is less than or equal to the lower limit value T_{Isl} of the preset temperature range and the timer is not time-out, control to increase the value of the charging current of the lithium battery to the preset constant-current charging current value, that is, making I=I_{CC}. If the temperature value is higher than the lower limit value T_{Isl} of the preset temperature range and the timer is already time-out, execute Step S408.

Step S408, selecting the current reducing controlling coefficient, generating the current reducing controlling instruction that is used in the next level (I=I_{CC}^{∗}C_{lowest}), and reducing the value of the charging current, and after the value of the charging current is reduced, entering Step S409.

In Step S408, generate the current reducing controlling instruction that is used in the next level, and execute this current reducing controlling instruction, to further reduce the value of the charging current of the smart watch. Specifically, in the present step, the content of the current reducing controlling instruction is to set the value of the charging current to be equal to the product value of the constant-current charging current value I_{CC} and the preset minimum value of the current reducing controlling coefficient C_{lowest}.

Step S409, judging whether the temperature value is less than or equal to the lower limit value of the temperature range and whether the timer is not time-out; and if not, entering Step S410.

In Step S409, the result of the comparison, between the temperature value of the lithium battery acquired in real time after the current reduction of Step S408 and the temperature lower limit value, is judged, and if the temperature value is less than or equal to the lower limit value T_{Isl} of the preset temperature range and the timer is not time-out, return to Step S401, control to increase the charging current of the smart watch to the preset constant-current charging current value I=I_{CC}, and continue the charging. If the temperature value is higher than the lower limit value T_{Isl} of the preset temperature range and the timer is already time-out, execute Step S410, control to turn off the wirelessly receiving coil, and stop the charging.

It should be noted that, in the present embodiment, only the means for controlling the current reducing by using the minimum value of the current reducing controlling coefficient is illustrated. In other embodiments, whether to turn off the wirelessly receiving coil may also be determined by counting the time number of current reducing, and by using the result of the comparison between the current reducing time number and a preset current reducing time number threshold. Continuously taking the content of Fig. 4 as an example, the present embodiment performs three times of current reducing, which are in Steps S404, S406 and S408. After the current reducing of Step S408 is executed, it may be judged in Step S409 whether the accumulated current reducing time number is equal to the preset current reducing time number threshold; and if yes, execute Step S410.

Step S410, turning off the wirelessly receiving coil, and stopping the charging; and entering Step S411.

Step S411, judging whether the temperature value is less than or equal to the lower limit value of the temperature range and whether the timer is not time-out; and if yes, executing Step S401; and if not, executing Step S410.

In Step S411, it judges whether the present temperature value of the lithium battery of the smart watch after the charging is stopped is less than or equal to the lower limit value of the temperature range, and if the temperature value is already less than or equal to the lower limit value of the temperature range, control to turn on the wirelessly receiving coil again, increase the value of the charging current of the smart watch to the preset constant-current charging current value I=I_{CC}, and continue the charging, to complete the charging process as soon as possible. If the temperature value is already higher than the lower limit value of the temperature range, continue to turn off the wirelessly receiving coil, and maintain the charging stopping state, and the result of the comparison between the temperature value and the lower limit value of the temperature range is judged in real time, and when the temperature value falls back to the lower limit value of the temperature range, turn on the wirelessly receiving coil, and continues the charging.

It should be noted that, Step S401 comprises the two substeps of turning on the wirelessly receiving coil and setting the value of the charging current to be equal to the preset constant-current charging current value. In practical applications it is required to judge whether the wirelessly receiving coil is to be turned on according to the circumstance. For example, in Step S405, if it is determined that the temperature value is less than or equal to the lower limit value of the preset temperature range and the timer is not time-out, it only needs to control to increase the value of the charging current, and set the present value of the charging current to be the constant-current charging current value, and does not need to turn on the wirelessly receiving coil again. However, in Step S411, because Step S410 was executed previously and the wirelessly receiving coil was turned off, if in Step S411 it is determined that the temperature value is less than or equal to the lower limit value of the temperature range and the timer is not time-out, it needs to turn on the wirelessly receiving coil again, receives the charging current again, and increases the value of the charging current to the preset constant-current charging current value.

### The second embodiment

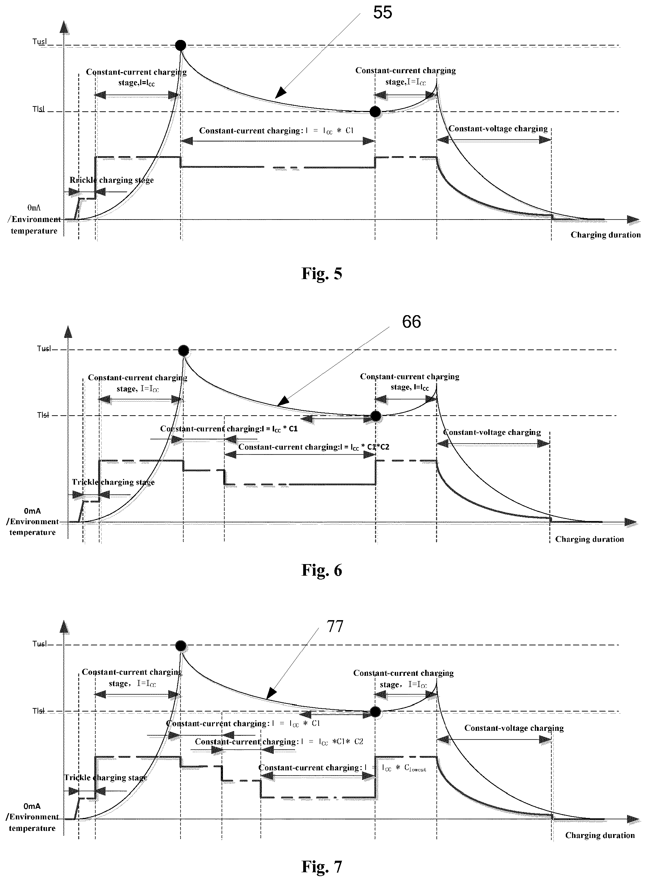

Fig. 5 is the schematic diagram of the charging curve of a lithium battery at relatively high environment temperature or in an environment of poor heat dissipation provided by another embodiment of the present disclosure. Referring to Fig. 5, in the present embodiment, the case wherein the value of the charging current of the wearable electronic device is controlled to be reduced all at once is illustrated. Specifically, the level current reducing controlling coefficient for present use is a current reducing controlling coefficient C1 of a first level (C1 is a numerical value that is less than 1), and a current reducing controlling instruction for present use is generated according to the current reducing controlling coefficient C1 of the first level (setting a product value of the current reducing controlling coefficient of the first level and the preset constant-current charging current value in the current reducing controlling instruction for the present use, to indicate that the value of the charging current after current reduction of the present level is this product value); and send this current reducing controlling instruction to a processing chip that controls the wirelessly receiving coil, to cause the processing chip to reduce a voltage numerical value of a current and power pin, thereby reducing the value of the charging current of the wearable electronic device.

Referring to the curve 55 of the battery temperature varying with time in Fig. 5, after one time of current reducing is employed, the temperature of the battery of the smart watch falls back to around the lower limit value of the temperature range, and under the effect of the current reducing measures, the temperature of the battery of the smart watch increases accidently. However, it is not required to employ the measures for reducing the charging current and reduce the temperature so long as the upper limit value of the preset temperature range is not exceeded, which can ensure the quick charging and save the charging time.

In the present embodiment, the method further comprises setting a duration threshold, timing from the time point when the value of the charging current of the wearable electronic device is reduced, to obtain a present current reducing duration; and if when the present current reducing duration is equal to the preset present duration threshold, the temperature value that is in real time monitored is still within the temperature range, according to a current reducing controlling coefficient of a next level that is used in a next level, generating a current reducing controlling instruction of a next level, and controlling to continue to reduce the value of the charging current of the wearable electronic device.

The effect of setting the duration threshold is to reduce the temperature within a set duration window, and the duration threshold can be set according to the demands of practical applications. For example, in environments that are relatively sensitive to temperature, the duration may be set to be relatively short, and accordingly if the temperature does not fall to the preset condition within a short duration, further cooling measures may be employed (that is, selecting a current reducing controlling parameter of a next level, and generating a current reducing controlling instruction of a next level). When the operations are in environments that are not sensitive to temperature, the duration threshold may be set to be relatively long, which can shorten the charging duration.

### The third embodiment

Fig. 6 is the schematic diagram of the charging curve of a lithium battery at relatively high environment temperature or in an environment of poor heat dissipation provided by another embodiment of the present disclosure. If, after the current reducing controlling measure of a first level is employed, the temperature of the smart watch is still not less than or equal to the lower limit value of the temperature range, and the preset timer time is already time-out, further current reducing controlling measures are employed, to further reduce the value of the charging current of the smart watch, and thus reduce the temperature value. In the present embodiment, the case wherein when current reducing controlling means of two levels are employed to cool, the current reducing controlling means of two levels have a progressive relation, is illustrated. It can be understood that, if, after the current reducing controlling measure of a first level is employed, the temperature value of the lithium battery of the smart watch has already fallen to be less than or equal to the lower limit value of the temperature range when the duration reaches the present set duration threshold, the current reducing controlling measure of a second level may be omitted.

Specifically, referring to the curve 66 of the battery temperature varying with time in Fig. 6, when the value of the charging current of the smart watch reaches the set constant-current charging current value, that is, I=I_{CC}, according to the current reducing controlling coefficient of a first level, control to generate the current reducing controlling instruction of a first level (that is, set the charging current to be I=I_{CC}^{∗}C1), and, according to the result of the monitoring of the prsent temperature, if the present temperature value is still relatively high (for example, not less than or equal to the lower limit value of the temperature range), select the current reducing controlling coefficient of a next level (C2, C2 is less than 1), control to generate the current reducing controlling instruction of a next level (that is, set the charging current I=I_{CC}^{∗}C1^{∗}C2), and send the current reducing controlling instruction to a processing chip that controls the wirelessly receiving coil, to cause the processing chip to reduce a voltage numerical value of a current and power pin, thereby reducing the value of the charging current of the wearable electronic device, and thus reducing the temperature of the smart watch, to prevent the adverse outcomes caused by too high temperature.

As shown in Fig. 6, after two levels of processively descending current reducing, the temperature curve of the smart watch has already presented an overall downward trend, and no longer approaches the upper limit value Tᵤₛₗ of the temperature range. Accordingly, current reducing controlling measures may be not taken further, to ensure the charging efficiency and save the charging time.

### The fourth embodiment

Fig. 7 is the schematic diagram of the charging curve of a lithium battery at relatively high environment temperature or in an environment of poor heat dissipation provided by another embodiment of the present disclosure. In the present embodiment, the case wherein when three levels of current reducing controlling means are employed to cool, the three levels of current reducing controlling means have a progressive relation, is illustrated. It can be understood that, if, after one level or two levels of current reducing controlling are employed, the temperature value of the lithium battery of the smart watch has already fallen to be less than or equal to the lower limit value of the temperature range when the duration reaches the present set duration threshold, the second or third level of current reducing controlling measure may be omitted.

Referring to the curve 77 of the battery temperature varying with time in Fig. 7, when the lithium battery of the smart watch is in the trickle charging stage, the temperature is relatively low, and when the value of the charging current of the lithium battery of the smart watch rises to the set constant-current charging current value, that is, I=I_{CC}, the temperature rises very quickly. Here, according to the temperature value that is in real time monitored, a current reducing controlling coefficient of a first level (that is, C1) is selected, the current reducing controlling instruction of a first level (that is, make I=I_{CC}^{∗}C1) is generated according to the current reducing controlling coefficient of a first level, and the current reducing controlling instruction is sent to a processing chip that controls the wirelessly receiving coil, to cause the processing chip to reduce a voltage numerical value of a current and power pin, thereby reducing the value of the charging current of the smart watch.

As shown by the curve 77 in Fig. 7, if, after the first level of current reducing within the duration that is set by the first timer, the temperature value of the lithium battery that is in real time collected is still relatively high (for example, higher than the lower limit value of the temperature range), a current reducing controlling coefficient of a next level (C2, C2 is less than 1)is selected, control to generate the current reducing controlling instruction of a next level (that is, set the charging current I=I_{CC}^{∗}C1^{∗}C2) according to the current reducing controlling coefficients of a next level C1 and C2, and the current reducing controlling instruction is sent to a processing chip that controls the wirelessly receiving coil, to cause the processing chip to reduce a voltage numerical value of a current and power pin, thereby reducing the value of the charging current of the wearable electronic device, and thus reducing the temperature of the smart watch.

If, after the two levels of current reducing within the duration that is set by the second timer, the temperature value that is in real time collected is still relatively high (for example higher than the lower limit value of the temperature range), the current reducing controlling coefficient of a next level (C_{lowest}) is selected, and control to generate the current reducing controlling instruction of a next level (that is, set the charging current I=I_{CC}^{∗}C_{lowest}) according to the current reducing controlling coefficient of a next level C_{lowest}, and the current reducing controlling instruction is sent to a processing chip that controls the wirelessly receiving coil, to cause the processing chip to reduce a voltage numerical value of a current and power pin, thereby reducing the value of the charging current of the smart watch to the predetermined minimum value.

Here, it should be noted that, after the current reducing wherein the current reducing controlling instructions are individually generated according to the current reducing controlling coefficient of a first level and the current reducing controlling coefficient of a second level, if the temperature value is still higher than the lower limit value Tₗₛₗ of the temperature range, that indicates that the effect caused by the means of reducing the temperature is not obvious, and it may be considered to set the value of the charging current of the lithium battery of the smart watch to be the preset minimum value of current, wherein the preset minimum value of current is preferably the value of the charging current of the trickle charging stage. Accordingly, the temperature value can be reduced as quick as possible.

After controlling to generate the current reducing controlling instruction (that is, setting the charging current I=I_{CC}^{∗}C_{lowest}) of a next level, and performing current reducing according to the current reducing controlling coefficient C_{lowest} of a next level, within the duration that is preset by the third timer, judge whether the temperature value monitored in real time is less than or equal to the lower limit value of the temperature range, and if, within the duration that is preset by the third timer, the temperature value is less than or equal to the lower limit value of the temperature range, control to increase the value of the charging current of the lithium battery of the smart watch, and continues the charging.

It should be noted that, in the present embodiment, the value ranges of the current reducing controlling coefficient C1 and the current reducing controlling coefficient C2 are preferably 0.1-0.5. The duration that is set by the first timer, the duration that is set by the second timer and the duration that is set by the third timer individually correspond to the electricity current reducing controlling instruction of each level, and the durations that are set by the three timers may be the same or different.

### The fifth embodiment

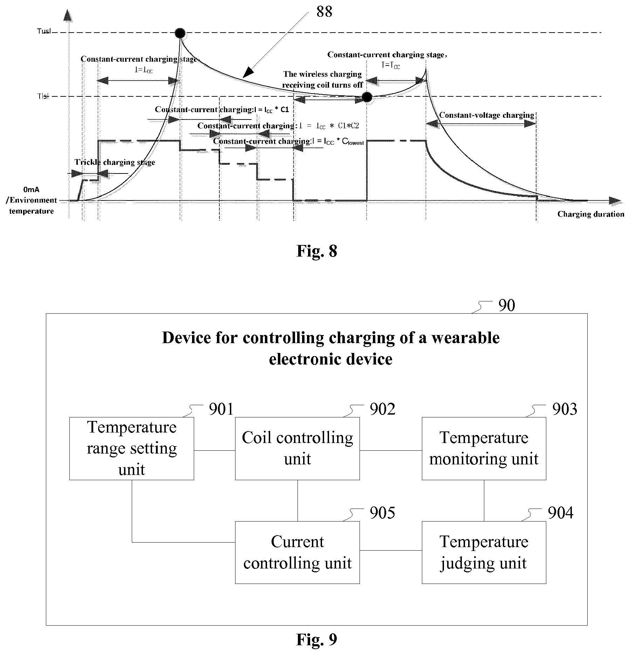

Fig. 8 is the schematic diagram of the charging curve of a lithium battery at relatively high environment temperature or in an environment of poor heat dissipation provided by another embodiment of the present disclosure. In the present embodiment, the case wherein when four levels of current reducing controlling means are employed to cool, the four levels of current reducing controlling means have a progressive relation, is illustrated. It can be understood that, if, after one level, two levels or three levels of current reducing controlling are employed, the temperature value of the lithium battery of the smart watch has already fallen to be less than or equal to the lower limit value of the temperature range when the duration reaches the present set duration threshold, the second, the third or the forth level of current reducing controlling measure may be omitted.

Referring to the curve 88 of the battery temperature varying with time in Fig. 8, it should be noted that, the first three levels of current reducing controlling measures of the present embodiment are the same as the three levels of current reducing controlling instruction of the third embodiment, which can be seen in the description on the above third embodiment, and will not be in detail described here.

The present embodiment emphatically describes the controlling means for the case wherein after the three levels of current reducing controlling means are employed, within the duration that is set by the third timer, the temperature value is still higher than the lower limit value of the temperature range.

Specially, referring to Fig. 8, the duration of the current reducing is counted from the time point when the third level of current reducing measure starts to be executed, and if when the present current reducing duration is equal to the preset present duration threshold (that is, the duration that is set by the fourth timer), the temperature value that is in real time monitored is still within the temperature range, the wirelessly receiving coil of the smart watch is controlled to be turned off, and stop the charging, to wait for the temperature to fall back. The temperature value is monitored in real time, and judge whether the temperature value that is monitored is less than or equal to the lower limit value of the temperature range within the duration that is set by the fourth timer; and if yes, turn on the wirelessly receiving coil again; and if not, continue to turn off the wirelessly receiving coil, and stop the charging, and continues to judge the result of the comparison between the temperature that is monitored and the lower limit value of the temperature range.

In the present embodiment, the method further comprises: setting a current reducing time number threshold or setting a lowest value of the charging current, and when reducing the value of the charging current of the smart watch by using multiple-level progression, accumulating the current reducing time number, and when the accumulated time number reaches the set current reducing time number threshold, controlling to turn off the wirelessly receiving coil of the wearable electronic device, and stopping the charging, to wait for the temperature to fall back. For example, the current reducing time number threshold is set to be three. In the present embodiment, each time the current reducing is performed once, the counted time number is added by 1 to accumulate. It can be seen that, in the present embodiment, the set current reducing time number threshold is reached only after accumulatively three times of current reducing, so it may take no account of the preset duration and judge only according to the single condition whether the temperature value is less than or equal to the temperature lower limit value, and if the temperature value that is monitored is still higher than the lower limit value, the wirelessly receiving coil is turned off directly, and stop the charging. Alternatively, if controlling to reduce progressively for multiple times the value of the charging current of the smart watch, if the present value of the charging current is not greater than the lowest value of the charging current, and the temperature value that is in real time monitored is still within the temperature range, control to turn off the wirelessly receiving coil of the smart watch.

### The sixth embodiment

Fig. 9 is the structural block diagram of a charging control apparatus for a wearable electronic device of an embodiment of the present disclosure. Referring to Fig. 9, the apparatus 90 for controlling charging of a wearable electronic device of the present embodiment comprises:
a temperature range setting unit 901, for setting a temperature range when the wearable electronic device is being charged according to a user demand;
a coil controlling unit 902, for when the charging starts, turning on a wirelessly receiving coil of the wearable electronic device, and using the wirelessly receiving coil to generate a charging current for charging the wearable electronic device;
a temperature monitoring unit 903, for when it is monitored that a value of the charging current of the wearable electronic device rises to a preset constant-current charging current value, acquiring in real time a temperature value of the wearable electronic device;
a temperature judging unit 904, for judging whether the temperature value is within the temperature range; and
a current controlling unit 905, for according to a judgment result of the temperature judging unit, maintaining the present value of the charging current of the wearable electronic device; or, changing the value of the charging current of the wearable electronic device, and thus changing the temperature value of the wearable electronic device, so that the temperature value of the wearable electronic device is within the temperature range.

In an embodiment of the present disclosure, the temperature monitoring unit 903 is specifically for collecting in real time a voltage value of a thermistor that is electrically connected to a battery of the wearable electronic device; and calculating out a present resistance value of the thermistor according to the voltage value of the thermistor, and according to a correspondence relation between the resistance value and the temperature, obtaining the temperature value of the battery of the wearable electronic device.

In an embodiment of the present disclosure, the temperature range setting unit 901 is for setting the temperature range to be the range between a set temperature upper limit value and a set temperature lower limit value;
the current controlling unit 905 is specifically for when the temperature value of the wearable electronic device is higher than the upper limit value of the temperature range, controlling to reduce all at once or reduce progressively for multiple times the value of the charging current of the wearable electronic device, so that the temperature value monitored in real time is less than or equal to the temperature lower limit value; and, when the temperature value of the wearable electronic device is less than or equal to the lower limit value of the temperature range, controlling to increase the value of the charging current of the wearable electronic device.

In an embodiment of the present disclosure, the current controlling unit 905 is specifically for setting one or more level current reducing controlling coefficients, and generating a current reducing controlling instruction for present use according to a corresponding level current reducing controlling coefficient; and sending the current reducing controlling instruction to a processing chip that controls the wirelessly receiving coil, to cause the processing chip to reduce a voltage numerical value of a current and power pin, thereby reducing the value of the charging current of the wearable electronic device.

In an embodiment of the present disclosure, the current controlling unit 905 is specifically for according to a level current reducing controlling coefficient for present use, generating the present current reducing controlling instruction;
In an embodiment of the present disclosure, the apparatus 90 for controlling charging of a wearable electronic device further comprises: a duration threshold setting unit, for setting a duration threshold; and the current controlling unit 905 is for controlling to reduce the value of the charging current of the wearable electronic device according to the present current reducing controlling instruction, so that the wearable electronic device is charged according to the current value that has been reduced; timing from the time point when the value of the charging current of the wearable electronic device is reduced, to obtain a present current reducing duration; and if when the present current reducing duration is equal to the preset present duration threshold, the temperature value that is in real time monitored by the temperature monitoring unit 903 is still within the temperature range, the current controlling unit 905, according to a current reducing controlling coefficient of a next level that is used in a next level, generates a current reducing controlling instruction of a next level, and controls to continue to reduce the value of the charging current of the wearable electronic device.

In an embodiment of the present disclosure, the current controlling unit 905 is further for if when the present current reducing duration is equal to the preset present duration threshold, the temperature value that is in real time monitored by the temperature monitoring unit 903 is still within the temperature range, the current controlling unit 905, controlling to turn off the wirelessly receiving coil of the wearable electronic device; in an embodiment of the present disclosure, the apparatus 90 for controlling charging of a wearable electronic device further comprises: a current reducing time number threshold setting unit for setting a current reducing time number threshold or a lowest value of the charging current setting unit for setting a lowest value of the charging current,
the current controlling unit 905 is for, if controlling to reduce progressively for multiple times the value of the charging current of the wearable electronic device, accumulating the current reducing time number, and if the accumulated current reducing time number reaches the current reducing time number threshold that is set by the current reducing time number threshold setting unit, and the temperature value that is in real time monitored by the temperature monitoring unit 903 is still within the temperature range, controlling to turn off the wirelessly receiving coil of the wearable electronic device; or the current controlling unit 905 is for, if controlling to reduce progressively for multiple times the value of the charging current of the wearable electronic device, if the present value of the charging current is not greater than the lowest value of the charging current, and the temperature value that is in real time monitored by the temperature monitoring unit 903 is still within the temperature range, controlling to turn off the wirelessly receiving coil of the wearable electronic device.

In an embodiment of the present disclosure, the current controlling unit 905 is specifically for setting a current reducing controlling coefficient of a first level, wherein the current reducing controlling coefficient of a first level is a numerical value that is less than 1; and the generating a current reducing controlling instruction for present use according to a corresponding level current reducing controlling coefficient comprises: when the level current reducing controlling coefficient for present use is the current reducing controlling coefficient of the first level, setting a product value of the current reducing controlling coefficient of the first level and the set constant-current charging current value, in the current reducing controlling instruction for present use, to indicate that the value of the charging current after current reduction of the present level is the product value; or, the current controlling unit 905 is specifically for setting a current reducing controlling coefficient of a first level and a current reducing controlling coefficient of a second level, wherein the current reducing controlling coefficient of the first level and the current reducing controlling coefficient of the second level are both numerical values that are less than 1; and the according to a current reducing controlling coefficient of a next level that is used in a next level, generating a current reducing controlling instruction of a next level comprises: when the current reducing controlling coefficient of the next level that is used in the next level comprises the current reducing controlling coefficient of the first level and the current reducing controlling coefficient of the second level, setting a product value of the current reducing controlling coefficient of the second level and the current reducing controlling coefficient of the first level and the set constant-current charging current value, in the current reducing controlling instruction of the next level, to indicate that the value of the charging current after current reduction of the next level is the product value.

It should be noted that, the apparatus for controlling charging of a wearable electronic device of the present embodiment is corresponding to the charging control method for a wearable electronic device of the above embodiments, and the implementation steps of the apparatuscharging control apparatus for a wearable electronic device of the present embodiment may be specifically seen in the description on the portion of the above charging control method for a wearable electronic device, and will not be in detail described here.

Furthermore, still another embodiment of the present disclosure further provides a smart watch, wherein the smart watch is provided with the apparatuscharging control apparatus for a wearable electronic device of the above embodiment of the present disclosure, and the apparatus for controlling charging causes a temperature value of the smart watch when being charged in a wireless mode to be within a set temperature range. Because the temperature of the smart watch in wireless charging is controlled within the set temperature range, thereby the user usage experience is enhanced and the competitive power of the smart watch is greatly increased.

In conclusion, it can be known that, the technical solutions of the embodiments of the present disclosure set the temperature range, and when the value of the charging current of the wearable electronic device rises to the set constant-current charging current value, according to the temperature value of the wearable electronic device that is in real time monitored and the result of the comparison between the temperature value and the temperature range, employ corresponding current controlling measures. In especial when the temperature value exceeds the temperature range, the technical solutions reduce the temperature by reducing the charging current. Compared with the traditional solution of adding heat conduction elements, the solution has lower cost, and is suitable for large-scale applications.

In addition, the solution in real time monitors the temperature value, and when the temperature is less than or equal to the temperature range, restores the current of the wearable electronic device, which enables the apparatus to quickly charge and shortens the charging duration. Compared with the conventional cooling solution of temporarily stopping the charging, the solution prolongs the battery life, and meanwhile realizes quick charging at near room temperature, thereby improving the user experience.

## Claims

1. A charging control method for a wearable electronic device, **characterized in that** the method comprises:
setting a temperature range when the wearable electronic device is being charged according to a user demand;
when the charging starts, turning on a wirelessly receiving coil of the wearable electronic device, and using the wirelessly receiving coil to generate a charging current for charging the wearable electronic device;
when it is monitored that a value of the charging current of the wearable electronic device rises to a set constant-current charging current value, acquiring in real time a temperature value of the wearable electronic device; and
judging whether the temperature value is within the temperature range; and if yes, maintaining the present value of the charging current of the wearable electronic device; and if not, changing the value of the charging current of the wearable electronic device, and thus changing the temperature value of the wearable electronic device, so that the temperature value of the wearable electronic device is within the temperature range;
wherein the temperature range is the range between a set temperature upper limit value and a set temperature lower limit value, and the changing the value of the charging current of the wearable electronic device comprises:
when the temperature value of the wearable electronic device is higher than the upper limit value of the temperature range, controlling to reduce all at once or reduce progressively for multiple times the value of the charging current of the wearable electronic device, so that the temperature value monitored in real time is less than or equal to the temperature lower limit value; and
when the temperature value of the wearable electronic device is less than or equal to the lower limit value of the temperature range, controlling to increase the value of the charging current of the wearable electronic device;
wherein the method further comprises setting a duration threshold; and
the controlling to reduce all at once or reduce progressively for multiple times the value of the charging current of the wearable electronic device, so that the temperature value monitored in real time is less than or equal to the temperature lower limit value comprises:
setting one or more level current reducing controlling coefficients, and generating a current reducing controlling instruction for present use according to a corresponding level current reducing controlling coefficient;
sending the current reducing controlling instruction to a processing chip that controls the wirelessly receiving coil, to cause the processing chip to reduce a voltage numerical value of a current and power pin, thereby reducing the value of the charging current of the wearable electronic device;
controlling to reduce the value of the charging current of the wearable electronic device according to the present current reducing controlling instruction, so that the wearable electronic device is charged according to the current value that has been reduced;
timing from the time point when the value of the charging current of the wearable electronic device is reduced, to obtain a present current reducing duration; and
if when the present current reducing duration is equal to the preset duration threshold, the temperature value monitored in real time is still within the temperature range, according to current reducing controlling coefficient of a next level that are used in a next level, generating a current reducing controlling instruction of a next level, and controlling to continue to reduce the value of the charging current of the wearable electronic device.

2. The method according to claim 1, **characterized in that** the acquiring in real time a temperature value of the wearable electronic device comprises:
collecting in real time a voltage value of a thermistor that is electrically connected to a battery of the wearable electronic device; and
calculating out a present resistance value of the thermistor according to the voltage value of the thermistor, and according to a correspondence relation between the resistance value and the temperature, obtaining the temperature value of the battery of the wearable electronic device.

3. The method according to claim 1, **characterized in that** the controlling to reduce all at once or reduce progressively for multiple times the value of the charging current of the wearable electronic device, so that the temperature value monitored in real time is less than or equal to the temperature lower limit value further comprises: if when the present current reducing duration is equal to the preset duration threshold, the temperature value monitored in real time is still within the temperature range, then controlling to turn off a wirelessly receiving coil of the wearable electronic device; and
the method further comprises: setting a current reducing time number threshold or setting a lowest value of the charging current; and
if controlling to reduce progressively for multiple times the value of the charging current of the wearable electronic device, accumulating the current reducing time number, and if the accumulated current reducing time number reaches the preset current reducing time number threshold, and the temperature value monitored in real time is still within the temperature range, controlling to turn off the wirelessly receiving coil of the wearable electronic device; or if controlling to reduce progressively for multiple times the value of the charging current of the wearable electronic device, if the present value of the charging current is not greater than the lowest value of the charging current, and the temperature value monitored in real time is still within the temperature range, controlling to turn off the wirelessly receiving coil of the wearable electronic device.

4. The method according to claim 3, **characterized in that**
the setting one or more level current reducing controlling coefficients comprises: setting a current reducing controlling coefficient of a first level, wherein the current reducing controlling coefficient of the first level is a numerical value that is less than 1;
the generating a current reducing controlling instruction for present use according to a corresponding level current reducing controlling coefficient comprises:
when the level current reducing controlling coefficient for present use is the current reducing controlling coefficient of the first level, setting a product value of the current reducing controlling coefficient of the first level and the set constant-current charging current value in the current reducing controlling instruction for present use, to indicate that the value of the charging current after the current reduction of the present level is the product value; or,
the setting one or more level current reducing controlling coefficients comprises: setting a current reducing controlling coefficient of a first level and a current reducing controlling coefficient of a second level, wherein the current reducing controlling coefficient of the first level and the current reducing controlling coefficient of the second level are both numerical values that are less than 1; and
the according to current reducing controlling coefficients of a next level that are used in a next level, generating a current reducing controlling instruction of a next level comprises:
when the current reducing controlling coefficients of a next level that are used in a next level comprises the current reducing controlling coefficient of the first level and the current reducing controlling coefficient of the second level, setting a product value of the current reducing controlling coefficient of the second level and the current reducing controlling coefficient of the first level and the set constant-current charging current value, in the current reducing controlling instruction of a next level, to indicate that the value of the charging current after the current reduction of the next level is the product value.

5. A charging control apparatus for a wearable electronic device, **characterized in that** the apparatus (90) comprises:
a temperature range setting unit (901), for setting a temperature range when the wearable electronic device is being charged according to a user demand;
a coil controlling unit (902), for when the charging starts, turning on a wirelessly receiving coil of the wearable electronic device, and using the wirelessly receiving coil to generate a charging current for charging the wearable electronic device;
a temperature monitoring unit (903), for when it is monitored that a value of the charging current of the wearable electronic device rises to a set constant-current charging current value, acquiring in real time a temperature value of the wearable electronic device;
a temperature judging unit (904), for judging whether the temperature value is within the temperature range; and
a current controlling unit (905), for according to a judgment result of the temperature judging unit, maintaining the present value of the charging current of the wearable electronic device; or, changing the value of the charging current of the wearable electronic device, and thus changing the temperature value of the wearable electronic device, so that the temperature value of the wearable electronic device is within the temperature range;
wherein the temperature range is the range between a set temperature upper limit value and a set temperature lower limit value;
the current controlling unit (905) is specifically for when the temperature value of the wearable electronic device is higher than the upper limit value of the temperature range, controlling to reduce all at once or reduce progressively for multiple times the value of the charging current of the wearable electronic device, so that the temperature value monitored in real time is less than or equal to the temperature lower limit value; and
when the temperature value of the wearable electronic device is less than or equal to the lower limit value of the temperature range, controlling to increase the value of the charging current of the wearable electronic device, and the controlling to increase the value of the charging current is to increase the present value of the charging current to the preset constant-current charging current value;
wherein the apparatus (90) further comprises: a duration threshold setting unit, for setting a duration threshold;
the current controlling unit (905) is further specifically for, setting one or more level current reducing controlling coefficients, and generating a current reducing controlling instruction for present use according to a corresponding level current reducing controlling coefficient;
sending the current reducing controlling instruction to a processing chip that controls the wirelessly receiving coil, to cause the processing chip to reduce a voltage numerical value of a current and power pin, thereby reducing the value of the charging current of the wearable electronic device;
controlling to reduce the value of the charging current of the wearable electronic device according to the present current reducing controlling instruction, so that the wearable electronic device is charged according to the current value that has been reduced;
timing from the time point when the value of the electricity charging current of the wearable electronic device is reduced, to obtain a present current reducing duration; and
if when the present current reducing duration is equal to the duration threshold that is preset by the duration threshold setting unit, the temperature value that is in real time monitored by the temperature monitoring unit (903) is still within the temperature range, according to current reducing controlling coefficients of a next level that are used in a next level, generating a current reducing controlling instruction of a next level, and controlling to continue to reduce the value of the charging current of the wearable electronic device.

6. The apparatus according to claim 5, **characterized in that** the temperature monitoring unit (903) is specifically for collecting in real time a voltage value of a thermistor that is electrically connected to a battery of the wearable electronic device; and calculating out a present resistance value of the thermistor according to the voltage value of the thermistor, and according to a correspondence relation between the resistance value and the temperature, obtaining the temperature value of the battery of the wearable electronic device.

7. The apparatus according to claim 5, **characterized in that** the current controlling unit (905) is further for, if when the present current reducing duration is equal to the present duration threshold that is preset by the duration threshold setting unit, the temperature value that is in real time monitored by the temperature monitoring unit (903) is still within the temperature range, controlling to turn off the wirelessly receiving coil of the wearable electronic device;
the apparatus (90) further comprises: a current reducing time number threshold setting unit for setting a current reducing time number threshold or a lowest value of the charging current setting unit for setting a lowest value of the charging current; and
the current controlling unit (905) is for if controlling to reduce progressively for multiple times the value of the charging current of the wearable electronic device, accumulating the current reducing time number, and if the accumulated current reducing time number reaches the current reducing time number threshold that is set by the current reducing time number threshold setting unit, and the temperature value that is in real time monitored by the temperature monitoring unit (903) is still within the temperature range, controlling to turn off the wirelessly receiving coil of the wearable electronic device; or the current controlling unit (905) is for if controlling to reduce progressively for multiple times the value of the charging current of the wearable electronic device, if the present value of the charging current is not greater than the lowest value of the charging current that is set by the lowest value of the charging current setting unit, and the temperature value that is in real time monitored by the temperature monitoring unit (903) is still within the temperature range, controlling to turn off the wirelessly receiving coil of the wearable electronic device.

8. The apparatus according to claim 7, **characterized in that** the setting one or more level current reducing controlling coefficients comprises: setting a current reducing controlling coefficient of a first level, wherein the current reducing controlling coefficient of a first level is a numerical value that is less than 1;
the generating a current reducing controlling instruction for present use according to a corresponding level current reducing controlling coefficient comprises:
when the level current reducing controlling coefficient for present use is the current reducing controlling coefficient of a first level, setting a product value of the current reducing controlling coefficient of a first level and the preset constant-current charging current value in the current reducing controlling instruction for present use, to indicate that the value of the charging current after current reduction of the present level is the product value;
the setting one or more level current reducing controlling coefficients comprises: setting a current reducing controlling coefficient of a first level and a current reducing controlling coefficient of a second level, wherein the current reducing controlling coefficient of a first level and the current reducing controlling coefficient of a second level are both numerical values that are less than 1; and
the according to current reducing controlling coefficients of a next level that are used in a next level, generating a current reducing controlling instruction of a next level comprises:
when the current reducing controlling coefficients of a next level that are used in a next level comprises the current reducing controlling coefficient of a first level and the current reducing controlling coefficient of a second level, setting a product value of the current reducing controlling coefficient of the second level and the current reducing controlling coefficient of the first level and the set constant-current charging current value, in the current reducing controlling instruction of a next level, to indicate that the value of the charging current after current reduction of the next level is the product value.

9. A smart watch, **characterized in that** the smart watch is provided with the charging control apparatus for a wearable electronic device according to any one of claims 5-8, and the apparatus for controlling charging enables a temperature value of the smart watch when being charged in a wireless mode to be within a preset temperature range.

## Patentansprüche

1. Ladesteuerungsverfahren für eine am Körper tragbare elektronische Vorrichtung, **dadurch gekennzeichnet, dass** das Verfahren umfasst:
Einstellen eines Temperaturbereichs, wenn die am Körper tragbare elektronische Vorrichtung gemäß einem Nutzerbedarf geladen wird;
wenn das Laden beginnt, Einschalten einer drahtlos empfangenden Spule der am Körper tragbaren elektronischen Vorrichtung, und Verwenden der drahtlos empfangenden Spule, um einen Ladestrom zum Laden der am Körper tragbaren elektronischen Vorrichtung zu erzeugen;
wenn überwacht wird, dass ein Wert des Ladestroms der am Körper tragbaren elektronischen Vorrichtung auf einen eingestellten Konstantstrom-Ladestromwert ansteigt, Erfassen, in Echtzeit, eines Temperaturwertes der am Körper tragbaren elektronischen Vorrichtung; und
Beurteilen, ob der Temperaturwert innerhalb des Temperaturbereichs liegt; und wenn ja, Beibehalten des gegenwärtigen Wertes des Ladestroms der am Körper tragbaren elektronischen Vorrichtung; und wenn nicht, Ändern des Wertes des Ladestroms der am Körper tragbaren elektronischen Vorrichtung, und somit Ändern des Temperaturwertes der am Körper tragbaren elektronischen Vorrichtung dergestalt, dass der Temperaturwert der am Körper tragbaren elektronischen Vorrichtung innerhalb des Temperaturbereichs liegt;
wobei der Temperaturbereich der Bereich zwischen einem oberen Solltemperaturgrenzwert und einem unteren Solltemperaturgrenzwert ist und das Ändern des Wertes des Ladestroms der am Körper tragbaren elektronischen Vorrichtung umfasst:
wenn der Temperaturwert der am Körper tragbaren elektronischen Vorrichtung höher als der obere Grenzwert des Temperaturbereichs ist, Veranlassen, dass der Wert des Ladestroms der am Körper tragbaren elektronischen Vorrichtung auf einmal oder progressiv mehrere Male so reduziert wird, dass der in Echtzeit überwachte Temperaturwert maximal so groß wie der untere Temperaturgrenzwert ist; und
wenn der Temperaturwert der am Körper tragbaren elektronischen Vorrichtung maximal so groß wie der untere Grenzwert des Temperaturbereichs ist, Veranlassen, dass der Wert des Ladestroms der am Körper tragbaren elektronischen Vorrichtung erhöht wird;
wobei das Verfahren des Weiteren das Einstellen einer Zeitdauerschwelle umfasst; und
das Veranlassen, dass der Wert des Ladestroms der am Körper tragbaren elektronischen Vorrichtung auf einmal oder progressiv mehrere Male so reduziert wird, dass der in Echtzeit überwachte Temperaturwert maximal so groß wie der untere Temperaturgrenzwert ist, umfasst:
Einstellen eines oder mehrerer Stufen-Stromreduzierungssteuerungskoeffizienten und Erzeugen einer Stromreduzierungssteuerungsinstruktion für die momentane Verwendung gemäß einem entsprechenden Stufen-Stromreduzierungssteuerungskoeffizienten;
Senden der Stromreduzierungssteuerungsinstruktion an einen Verarbeitungschip, der die drahtlos empfangende Spule steuert, um den Verarbeitungschip zu veranlassen, einen numerischen Spannungswert eines Strom- und Leistungspins zu reduzieren, wodurch der Wert des Ladestroms der am Körper tragbaren elektronischen Vorrichtung verringert wird;
Veranlassen, dass der Wert des Ladestroms der am Körper tragbaren elektronischen Vorrichtung gemäß der momentanen Stromreduzierungssteuerungsinstruktion so reduziert wird, dass die am Körper tragbare elektronische Vorrichtung gemäß dem Stromwert geladen wird, der reduziert wurde;
Messen der Zeit ab dem Zeitpunkt, an dem der Wert des Ladestroms der am Körper tragbaren elektronischen Vorrichtung reduziert wird, um eine momentane Stromreduzierungsdauer zu erhalten; und
falls, wenn die momentane Stromreduzierungsdauer gleich der voreingestellten Zeitdauerschwelle ist, der in Echtzeit überwachte Temperaturwert immer noch innerhalb des Temperaturbereichs liegt, gemäß Stromreduzierungssteuerungskoeffizienten einer nächsten Stufe, die in einer nächsten Stufe verwendet werden, Erzeugen einer Stromreduzierungssteuerungsinstruktion einer nächsten Stufe und Veranlassen, dass der Wert des Ladestroms der am Körper tragbaren elektronischen Vorrichtung weiter reduziert wird.

2. Verfahren nach Anspruch 1, **dadurch gekennzeichnet, dass** das Erfassen eines Temperaturwertes der am Körper tragbaren elektronischen Vorrichtung in Echtzeit umfasst:
Erfassen, in Echtzeit, eines Spannungswertes eines Thermistors, der elektrisch mit einer Batterie der am Körper tragbaren elektronischen Vorrichtung verbunden ist; und
Berechnen eines momentanen Widerstandswertes des Thermistors gemäß dem Spannungswert des Thermistors und, gemäß einer Entsprechungsbeziehung zwischen dem Widerstandswert und der Temperatur, Erhalten des Temperaturwertes der Batterie der am Körper tragbaren elektronischen Vorrichtung.

3. Verfahren nach Anspruch 1, **dadurch gekennzeichnet, dass** das Veranlassen, dass der Wert des Ladestroms der am Körper tragbaren elektronischen Vorrichtung auf einmal oder progressiv mehrere Male so reduziert wird, dass der in Echtzeit überwachte Temperaturwert maximal so groß wie der untere Temperaturgrenzwert ist, des Weiteren umfasst:
falls, wenn die momentane Stromreduzierungsdauer gleich der voreingestellten Zeitdauerschwelle ist, der in Echtzeit überwachte Temperaturwert immer noch innerhalb des Temperaturbereichs liegt, dann Veranlassen, dass eine drahtlos empfangende Spule der am Körper tragbaren elektronischen Vorrichtung ausgeschaltet wird; und
wobei das Verfahren des Weiteren umfasst:
Einstellen einer Schwelle einer Anzahl von Malen der Stromreduzierung oder Einstellen eines niedrigsten Wertes des Ladestroms; und
falls veranlasst wird, dass der Wert des Ladestroms der am Körper tragbaren elektronischen Vorrichtung progressiv mehrere Male reduziert wird, Akkumulieren der Anzahl von Malen der Stromreduzierung, und wenn die akkumulierte Anzahl von Malen der Stromreduzierung die voreingestellte Schwelle der Anzahl von Malen der Stromreduzierung erreicht und der in Echtzeit überwachte Temperaturwert immer noch innerhalb des Temperaturbereichs liegt, Veranlassen, dass die drahtlos empfangende Spule der am Körper tragbaren elektronischen Vorrichtung ausgeschaltet wird; oder
falls veranlasst wird, dass der Wert des Ladestroms der am Körper tragbaren elektronischen Vorrichtung progressiv mehrere Male reduziert wird, falls der momentane Wert des Ladestroms nicht größer als der niedrigste Wert des Ladestroms ist und der in Echtzeit überwachte Temperaturwert immer immer noch innerhalb des Temperaturbereichs liegt, Veranlassen, dass die drahtlos empfangende Spule der am Körper tragbaren elektronischen Vorrichtung ausgeschaltet wird.

4. Verfahren nach Anspruch 3, **dadurch gekennzeichnet, dass**:
das Einstellen eines oder mehrerer Stufen-Stromreduzierungssteuerungskoeffizienten umfasst:
Einstellen eines Stromreduzierungssteuerungskoeffizienten einer ersten Stufe, wobei der Stromreduzierungssteuerungskoeffizient der ersten Stufe ein numerischer Wert ist, der kleiner als 1 ist;
das Erzeugen einer Stromreduzierungssteuerungsinstruktion für die momentane Verwendung gemäß einem entsprechenden Stufen-Stromreduzierungssteuerungskoeffizienten umfasst:
wenn der Stufen-Stromreduzierungssteuerungskoeffizient für die momentane Verwendung der Stromreduzierungssteuerungskoeffizient der ersten Stufe ist, Einstellen eines Produktwertes des Stromreduzierungssteuerungskoeffizienten der ersten Stufe und des eingestellten Konstantstrom-Ladestromwertes in der Stromreduzierungssteuerungsinstruktion für die momentane Verwendung dergestalt, dass angezeigt wird, dass der Wert des Ladestroms nach der Stromreduzierung der momentanen Stufe der Produktwert ist; oder
das Einstellen eines oder mehrerer Stufen-Stromreduzierungssteuerungskoeffizienten umfasst:
Einstellen eines Stromreduzierungssteuerungskoeffizienten einer ersten Stufe und eines Stromreduzierungssteuerungskoeffizienten einer zweiten Stufe, wobei der Stromreduzierungssteuerungskoeffizient der ersten Stufe und der Stromreduzierungssteuerungskoeffizient der zweiten Stufe beides numerische Werte sind, die kleiner als 1 sind; und
das Erzeugen einer Stromreduzierungssteuerungsinstruktion einer nächsten Stufe gemäß Stromreduzierungssteuerungskoeffizienten einer nächsten Stufe, die in einer nächsten Stufe verwendet werden, umfasst: wenn die Stromreduzierungssteuerungskoeffizienten einer nächsten Stufe, die in einer nächsten Stufe verwendet werden, den Stromreduzierungssteuerungskoeffizienten der ersten Stufe und den Stromreduzierungssteuerungskoeffizienten der zweiten Stufe umfassen, Einstellen eines Produktwertes des Stromreduzierungssteuerungskoeffizienten der zweiten Stufe und des Stromreduzierungssteuerungskoeffizienten der ersten Stufe und des eingestellten Konstantstrom-Ladestromwertes in der Stromreduzierungssteuerungsinstruktion einer nächsten Stufe dergestalt, dass angezeigt wird, dass der Wert des Ladestroms nach der Stromreduzierung der nächsten Stufe der Produktwert ist.

5. Ladesteuerungsvorrichtung für eine am Körper tragbare elektronische Vorrichtung, **dadurch gekennzeichnet, dass** die Vorrichtung (90) umfasst:
eine Temperaturbereichseinstelleinheit (901) zum Einstellen eines Temperaturbereichs, wenn die am Körper tragbare elektronische Vorrichtung gemäß einem Nutzerbedarf geladen wird;
eine Spulensteuereinheit (902) zum, wenn das Laden beginnt, Einschalten einer drahtlos empfangenden Spule der am Körper tragbaren elektronischen Vorrichtung und Verwenden der drahtlos empfangenden Spule, um einen Ladestrom zum Laden der am Körper tragbaren elektronischen Vorrichtung zu erzeugen;
eine Temperaturüberwachungseinheit (903) zum, wenn überwacht wird, dass ein Wert des Ladestroms der am Körper tragbaren elektronischen Vorrichtung auf einen eingestellten Konstantstrom-Ladestromwert ansteigt, Erfassen, in Echtzeit, eines Temperaturwertes der am Körper tragbaren elektronischen Vorrichtung; und
eine Temperaturbeurteilungseinheit (904) zum Beurteilen, ob der Temperaturwert innerhalb des Temperaturbereichs liegt; und
eine Stromsteuerungseinheit (905) zum, gemäß einem Beurteilungsergebnis der Temperaturbeurteilungseinheit, Aufrechterhalten des momentanen Wertes des Ladestroms der am Körper tragbaren elektronischen Vorrichtung; oder
Ändern des Wertes des Ladestroms der am Körper tragbaren elektronischen Vorrichtung und somit Ändern des Temperaturwertes der am Körper tragbaren elektronischen Vorrichtung dergestalt, dass der Temperaturwert der am Körper tragbaren elektronischen Vorrichtung innerhalb des Temperaturbereichs liegt;
wobei der Temperaturbereich der Bereich zwischen einem oberen Solltemperaturgrenzwert und einem unteren Solltemperaturgrenzwert ist;
wobei die Stromsteuerungseinheit (905) speziell eingerichtet ist zum, wenn der Temperaturwert der am Körper tragbaren elektronischen Vorrichtung höher als der obere Grenzwert des Temperaturbereichs ist, Veranlassen, dass der Wert des Ladestroms der am Körper tragbaren elektronischen Vorrichtung auf einmal oder progressiv mehrere Male so reduziert wird, dass der in Echtzeit überwachte Temperaturwert maximal so groß wie der untere Temperaturgrenzwert ist; und
wenn der Temperaturwert der am Körper tragbaren elektronischen Vorrichtung maximal so groß wie der untere Grenzwert des Temperaturbereichs ist, Veranlassen, dass der Wert des Ladestroms der am Körper tragbaren elektronischen Vorrichtung erhöht wird, wobei das Veranlassen, dass der Wert des Ladestroms erhöht wird, dazu dient, den momentanen Wert des Ladestroms auf den voreingestellten Konstantstrom-Ladestromwert zu erhöhen;
wobei die Vorrichtung (90) des Weiteren umfasst:
eine Zeitdauerschwelleneinstelleinheit zum Einstellen einer Zeitdauerschwelle;
wobei die Stromsteuerungseinheit (905) des Weiteren speziell eingerichtet ist zum Einstellen eines oder mehrerer Stufen-Stromreduzierungssteuerungskoeffizienten und Erzeugen einer Stromreduzierungssteuerungsinstruktion für die momentane Verwendung gemäß einem entsprechenden Stufen-Stromreduzierungssteuerungskoeffizienten;
Senden der Stromreduzierungssteuerungsinstruktion an einen Verarbeitungschip, der die drahtlos empfangende Spule steuert, um den Verarbeitungschip zu veranlassen, einen numerischen Spannungswert eines Strom- und Leistungspins zu reduzieren, wodurch der Wert des Ladestroms der am Körper tragbaren elektronischen Vorrichtung verringert wird;
Veranlassen, dass der Wert des Ladestroms der am Körper tragbaren elektronischen Vorrichtung gemäß der momentanen Stromreduzierungssteuerungsinstruktion so reduziert wird, dass die am Körper tragbare elektronische Vorrichtung gemäß dem Stromwert geladen wird, der reduziert wurde;
Messen der Zeit ab dem Zeitpunkt, an dem der Wert des Elektrizitätsladestroms der am Körper tragbaren elektronischen Vorrichtung reduziert wird, um eine momentane Stromreduzierungsdauer zu erhalten; und
falls, wenn die momentane Stromreduzierungsdauer gleich der Zeitdauerschwelle ist, die durch die Zeitdauerschwelleneinstelleinheit voreingestellt ist, der Temperaturwert, der in Echtzeit durch die Temperaturüberwachungseinheit (903) überwacht wird, immer noch innerhalb des Temperaturbereichs liegt, gemäß Stromreduzierungssteuerungskoeffizienten einer nächsten Stufe, die in einer nächsten Stufe verwendet werden, Erzeugen einer Stromreduzierungssteuerungsinstruktion einer nächsten Stufe und Veranlassen, dass der Wert des Ladestroms der am Körper tragbaren elektronischen Vorrichtung weiter reduziert wird.

6. Vorrichtung nach Anspruch 5, **dadurch gekennzeichnet, dass** die Temperaturüberwachungseinheit (903) speziell dazu dient, in Echtzeit einen Spannungswert eines Thermistors zu erfassen, der elektrisch mit einer Batterie der am Körper tragbaren elektronischen Vorrichtung verbunden ist; und einen momentanen Widerstandswert des Thermistors gemäß dem Spannungswert des Thermistors und gemäß einer Entsprechungsbeziehung zwischen dem Widerstandswert und der Temperatur auszurechnen, um den Temperaturwert der Batterie der am Körper tragbaren elektronischen Vorrichtung zu erhalten.

7. Vorrichtung nach Anspruch 5, **dadurch gekennzeichnet, dass** die Stromsteuerungseinheit (905) des Weiteren dazu dient, falls, wenn die momentane Stromreduzierungsdauer gleich der momentanen Zeitdauerschwelle ist, die durch die Zeitdauerschwelleneinstelleinheit voreingestellt ist, der Temperaturwert, der in Echtzeit durch die Temperaturüberwachungseinheit (903) überwacht wird, immer noch innerhalb des Temperaturbereichs liegt, zu veranlassen, die drahtlos empfangende Spule der am Körper tragbaren elektronischen Vorrichtung auszuschalten;
wobei die Vorrichtung (90) des Weiteren umfasst:
eine Stromreduzierungshäufigkeits-Schwelleneinstelleinheit zum Einstellen einer Schwelle einer Anzahl von Malen der Stromreduzierung oder eines niedrigsten Wertes der Ladestromeinstelleinheit zum Einstellen eines niedrigsten Wertes des Ladestroms; und
wobei die Stromsteuerungseinheit (905) dazu dient, wenn veranlasst wird, den Wert des Ladestroms der am Körper tragbaren elektronischen Vorrichtung progressiv mehrere Male zu reduzieren, die Anzahl von Malen der Stromreduzierung zu akkumulieren, und wenn die akkumulierte Anzahl von Malen der Stromreduzierung die Schwelle der Anzahl von Malen der Stromreduzierung erreicht, die durch die Stromreduzierungshäufigkeits-Schwelleneinstelleinheit eingestellt wurde, und der Temperaturwert, der in Echtzeit durch die Temperaturüberwachungseinheit (903) überwacht wird, immer noch innerhalb des Temperaturbereichs liegt, zu veranlassen, dass die drahtlos empfangende Spule der am Körper tragbaren elektronischen Vorrichtung ausgeschaltet wird; oder wobei die Stromsteuerungseinheit (905) dazu dient, falls veranlasst wird, dass der Wert des Ladestroms der am Körper tragbaren elektronischen Vorrichtung progressiv mehrere Male reduziert wird, falls der momentane Wert des Ladestroms nicht größer als der niedrigste Wert des Ladestroms ist, der durch den niedrigsten Wert der Ladestromeinstelleinheit eingestellt wurde und der Temperaturwert, der in Echtzeit durch die Temperaturüberwachungseinheit (903) überwacht wird, immer noch innerhalb des Temperaturbereichs liegt, zu veranlassen, dass die drahtlos empfangende Spule der am Körper tragbaren elektronischen Vorrichtung ausgeschaltet wird.

8. Vorrichtung nach Anspruch 7, **dadurch gekennzeichnet, dass** das Einstellen eines oder mehrerer Stufen-Stromreduzierungssteuerungskoeffizienten umfasst:
Einstellen eines Stromreduzierungssteuerungskoeffizienten einer ersten Stufe, wobei der Stromreduzierungssteuerungskoeffizient einer ersten Stufe ein numerischer Wert ist, der kleiner als 1 ist;
das Erzeugen einer Stromreduzierungssteuerungsinstruktion für die momentane Verwendung gemäß einem entsprechenden Stufen-Stromreduzierungssteuerungskoeffizienten umfasst:
wenn der Stufen-Stromreduzierungssteuerungskoeffizient für die momentane Verwendung der Stromreduzierungssteuerungskoeffizient einer ersten Stufe ist, Einstellen eines Produktwertes des Stromreduzierungssteuerungskoeffizienten einer ersten Stufe und des voreingestellten Konstantstrom-Ladestromwertes in der Stromreduzierungssteuerungsinstruktion für die momentane Verwendung dergestalt, dass angezeigt wird, dass der Wert des Ladestroms nach der Stromreduzierung der momentanen Stufe der Produktwert ist;
das Einstellen eines oder mehrerer Stufen-Stromreduzierungssteuerungskoeffizienten umfasst:
Einstellen eines Stromreduzierungssteuerungskoeffizienten einer ersten Stufe und eines Stromreduzierungssteuerungskoeffizienten einer zweiten Stufe, wobei der Stromreduzierungssteuerungskoeffizient einer ersten Stufe und der Stromreduzierungssteuerungskoeffizient einer zweiten Stufe beides numerische Werte sind, die kleiner als 1 sind; und
das Erzeugen einer Stromreduzierungssteuerungsinstruktion einer nächsten Stufe gemäß Stromreduzierungssteuerungskoeffizienten einer nächsten Stufe, die in einer nächsten Stufe verwendet werden, umfasst: wenn die Stromreduzierungssteuerungskoeffizienten einer nächsten Stufe, die in einer nächsten Stufe verwendet werden, den Stromreduzierungssteuerungskoeffizienten einer ersten Stufe und den Stromreduzierungssteuerungskoeffizienten einer zweiten Stufe umfassen, Einstellen eines Produktwertes des Stromreduzierungssteuerungskoeffizienten der zweiten Stufe und des Stromreduzierungssteuerungskoeffizienten der ersten Stufe und des eingestellten Konstantstrom-Ladestromwertes in der Stromreduzierungssteuerungsinstruktion einer nächsten Stufe dergestalt, dass angezeigt wird, dass der Wert des Ladestroms nach der Stromreduzierung der nächsten Stufe der Produktwert ist.

9. Intelligente Uhr, **dadurch gekennzeichnet, dass** die intelligente Uhr mit der Ladesteuerungsvorrichtung für eine am Körper tragbare elektronische Vorrichtung nach einem der Ansprüche 5-8 versehen ist und die Vorrichtung zur Ladesteuerung ermöglicht, dass ein Temperaturwert der intelligenten Uhr, wenn sie in einem drahtlosen Modus geladen wird, innerhalb eines voreingestellten Temperaturbereichs liegt.

## Revendications

1. Procédé de commande de charge pour dispositif électronique vestimentaire, **caractérisé en ce que** le procédé comprend les étapes suivantes :
régler une plage de températures lorsque le dispositif électronique vestimentaire est en cours de charge en fonction d'une demande d'utilisateur ;
lorsque la charge commence, mettre sous tension une bobine de réception sans fil du dispositif électronique vestimentaire, et utiliser la bobine de réception sans fil pour engendrer un courant de charge destiné à charger le dispositif électronique vestimentaire ;
lorsqu'il est détecté qu'une valeur du courant de charge du dispositif électronique vestimentaire s'est élevée jusqu'à une valeur définie de courant de charge à courant constant, acquérir en temps réel une valeur de température du dispositif électronique vestimentaire ; et
déterminer si la valeur de température se situe dans la plage de températures ; et dans l'affirmative, maintenir la valeur actuelle du courant de charge du dispositif électronique vestimentaire ; et dans la négative, modifier la valeur du courant de charge du dispositif électronique vestimentaire, et modifier ainsi la valeur de température du dispositif électronique vestimentaire, de manière que la valeur de température du dispositif électronique vestimentaire se situe dans la plage de températures ;
dans lequel la plage de températures est la plage comprise entre une valeur limite supérieure de température de consigne et une valeur limite inférieure de température de consigne, et la modification de la valeur du courant de charge du dispositif électronique vestimentaire comprend les étapes suivantes :
lorsque la valeur de température du dispositif électronique vestimentaire est supérieure à la valeur limite supérieure de la plage de températures, réguler à la baisse en une seule fois ou progressivement en plusieurs fois la valeur du courant de charge du dispositif électronique vestimentaire, de manière que la valeur de température surveillée en temps réel soit inférieure ou égale à la valeur limite inférieure de température ; et
lorsque la valeur de température du dispositif électronique vestimentaire est inférieure ou égale à la valeur limite inférieure de la plage de températures, réguler à la hausse la valeur du courant de charge du dispositif électronique vestimentaire ;
dans lequel le procédé comprend en outre le réglage d'un seuil de durée ; et
la régulation à la baisse en une seule fois ou progressive en plusieurs fois de la valeur du courant de charge du dispositif électronique vestimentaire, de manière que la valeur de température surveillée en temps réel soit inférieure ou égale à la valeur limite inférieure de température comprend les étapes suivantes :
définir un ou plusieurs coefficient(s) de régulation à la baisse du courant par niveaux, et engendrer une instruction de régulation à la baisse du courant à des fins d'utilisation actuelle en fonction d'un coefficient correspondant de régulation à la baisse du courant par niveaux ;
envoyer l'instruction de régulation à la baisse du courant à une puce de traitement qui commande la bobine de réception sans fil, pour faire réduire à la puce de traitement une valeur numérique de tension d'une broche de courant et de puissance, ce qui permet de réduire la valeur du courant de charge du dispositif électronique vestimentaire ;
réguler à la baisse la valeur du courant de charge du dispositif électronique vestimentaire, en fonction de l'instruction actuelle de régulation à la baisse du courant, de manière que le dispositif électronique vestimentaire soit chargé selon la valeur de courant qui a été réduite ;
mesurer le temps à partir du point temporel où la valeur du courant de charge du dispositif électronique vestimentaire est réduite, pour obtenir une durée actuelle de réduction de courant ; et
lorsque la durée actuelle de réduction de courant est égale au seuil de durée préréglé, si la valeur de température surveillée en temps réel se situe toujours dans la plage de températures, en fonction d'un coefficient de régulation à la baisse du courant d'un niveau suivant qui sont utilisés à un niveau suivant, engendrer une instruction de régulation à la baisse du courant d'un niveau suivant, et continuer de réguler à la baisse la valeur du courant de charge du dispositif électronique vestimentaire.

2. Procédé selon la revendication 1, **caractérisé en ce que** l'acquisition en temps réel d'une valeur de température du dispositif électronique vestimentaire comprend les étapes suivantes :
recueillir en temps réel une valeur de tension d'une thermistance qui est électriquement connectée à une batterie du dispositif électronique vestimentaire ; et
calculer une valeur actuelle de résistance de la thermistance en fonction de la valeur de tension de la thermistance, et selon une relation de correspondance entre la valeur de résistance et la température, obtenir la valeur de température de la batterie du dispositif électronique vestimentaire.

3. Procédé selon la revendication 1, **caractérisé en ce que** la régulation à la baisse en une seule fois ou progressive en plusieurs fois de la valeur du courant de charge du dispositif électronique vestimentaire, de manière que la valeur de température surveillée en temps réel soit inférieure ou égale à la valeur limite inférieure de température comprend en outre l'étape suivante : lorsque la durée actuelle de réduction de courant est égale au seuil de durée préréglé, si la valeur de température surveillée en temps réel se situe toujours dans la plage de températures, réaliser une commande de mise en hors tension d'une bobine de réception sans fil du dispositif électronique vestimentaire ; et
le procédé comprend en outre l'étape suivante : définir un nombre seuil de réductions de courant ou définir la valeur la plus basse du courant de charge ; et
en cas de régulation à la baisse progressive en plusieurs fois de la valeur du courant de charge du dispositif électronique vestimentaire, cumuler le nombre de réductions de courant, et si le nombre cumulé de réductions de courant atteint le nombre seuil prédéfini de réductions de courant, et que la valeur de température surveillée en temps réel se situe toujours dans la plage de températures, réaliser une commande de mise en hors tension de la bobine de réception sans fil du dispositif électronique vestimentaire ; ou en cas de régulation à la baisse progressive en plusieurs fois de la valeur du courant de charge du dispositif électronique vestimentaire, si la valeur actuelle du courant de charge n'est pas supérieure à la valeur la plus basse du courant de charge, et que la valeur de température surveillée en temps réel se situe toujours dans la plage de températures, réaliser une commande pour mettre hors tension la bobine de réception sans fil du dispositif électronique vestimentaire.

4. Procédé selon la revendication 3, **caractérisé en ce que** :
la définition d'un ou de plusieurs coefficient(s) de régulation à la baisse du courant par niveaux comprend l'étape suivante : définir un coefficient de régulation à la baisse du courant d'un premier niveau, dans lequel le coefficient de régulation à la baisse du courant du premier niveau est une valeur numérique qui est inférieure à 1 ;
la génération d'une instruction de régulation à la baisse du courant à des fins d'utilisation actuelle selon un coefficient correspondant de régulation à la baisse du courant par niveaux comprend les étapes suivantes :
lorsque le coefficient de régulation à la baisse du courant par niveaux à des fins d'utilisation actuelle est le coefficient de régulation à la baisse du courant du premier niveau, définir une valeur de produit du coefficient de régulation à la baisse du courant du premier niveau et de la valeur définie de courant de charge à courant constant dans l'instruction de régulation à la baisse du courant à des fins d'utilisation actuelle, pour indiquer que la valeur du courant de charge après la réduction de courant du niveau actuel est la valeur de produit ; ou
la définition d'un ou de plusieurs coefficient(s) de régulation à la baisse du courant comprend l'étape suivante :
définir un coefficient de régulation à la baisse du courant d'un premier niveau et un coefficient de régulation à la baisse du courant d'un second niveau, dans lequel le coefficient de régulation à la baisse du courant du premier niveau et le coefficient de régulation à la baisse du courant du second niveau sont tous deux des valeurs numériques qui sont inférieures à 1 ; et
la génération d'une instruction de régulation à la baisse du courant d'un niveau suivant, en fonction de coefficients de régulation à la baisse du courant d'un niveau suivant, qui sont utilisés à un niveau suivant, comprend l'étape suivante : lorsque les coefficients de régulation à baisse du courant d'un niveau suivant, qui sont utilisés à un niveau suivant comprennent le coefficient de régulation à la baisse du courant du premier niveau et le coefficient de régulation à la baisse du courant du second niveau, définir une valeur de produit du coefficient de régulation à la baisse du courant du second niveau et du coefficient de régulation à la baisse du courant du premier niveau et de la valeur définie de courant de charge à courant constant, dans l'instruction de régulation à la baisse du courant d'un niveau suivant, pour indiquer que la valeur du courant de charge après la réduction de courant du niveau suivant est la valeur de produit.

5. Appareil de commande de charge pour dispositif électronique vestimentaire, **caractérisé en ce que** l'appareil (90) comprend :
une unité de réglage de plage de températures (901) destinée à régler une plage de températures lorsque le dispositif électronique vestimentaire est en cours de charge selon une demande d'utilisateur ;
une unité de commande de bobine (902) destinée, lorsque la charge commence, à mettre sous tension une bobine de réception sans fil du dispositif électronique vestimentaire, et à utiliser la bobine de réception sans fil pour engendrer un courant de charge permettant de charger le dispositif électronique vestimentaire ;
une unité de surveillance de température (903) destinée, lorsqu'il est détecté qu'une valeur du courant de charge du dispositif électronique vestimentaire s'est élevée jusqu'à une valeur définie de courant de charge à courant constant, à acquérir en temps réel une valeur de température du dispositif électronique vestimentaire ;
une unité de détermination de température (904) destinée à déterminer si la valeur de température se situe dans la plage de températures ; et
une unité de régulation de courant (905) destinée, en fonction d'un résultat de détermination de l'unité de détermination de température, à maintenir la valeur actuelle du courant de charge du dispositif électronique vestimentaire ; ou à modifier la valeur du courant de charge du dispositif électronique vestimentaire, et à modifier ainsi la valeur de température du dispositif électronique vestimentaire, de manière que la valeur de température du dispositif électronique vestimentaire se situe dans la plage de températures ;
dans lequel la plage de températures est la plage comprise entre une valeur limite supérieure de température de consigne et une valeur limite inférieure de température de consigne ;
l'unité de régulation de courant (905) est spécifiquement destinée, lorsque la valeur de température du dispositif électronique vestimentaire est supérieure à la valeur limite supérieure de la plage de températures, à réguler à la baisse en une seule fois ou progressivement en plusieurs fois la valeur du courant de charge du dispositif électronique vestimentaire, de manière que la valeur de température surveillée en temps réel soit inférieure ou égale à la valeur limite inférieure de température ; et
lorsque la valeur de température du dispositif électronique vestimentaire est inférieure ou égale à la valeur limite inférieure de la plage de températures, à réguler à la hausse la valeur du courant de charge du dispositif électronique vestimentaire, et la régulation à la hausse de la valeur du courant de charge permet de porter la valeur actuelle du courant de charge à la valeur prédéfinie de courant de charge à courant constant ;
dans lequel l'appareil (90) comprend en outre : une unité de réglage de seuil de durée, destinée à régler un seuil de durée ;
l'unité de régulation de courant (905) est outre spécifiquement destinée à définir un ou plusieurs coefficient(s) de régulation à la baisse du courant par niveaux, et à engendrer une instruction de régulation à la baisse du courant à des fins d'utilisation actuelle en fonction d'un coefficient correspondant de régulation à la baisse du courant par niveaux ;
à envoyer l'instruction de régulation à la baisse du courant à une puce de traitement qui commande la bobine de réception sans fil, pour faire réduire à la puce de traitement une valeur numérique de tension d'une broche de courant et de puissance, ce qui permet de réduire la valeur du courant de charge du dispositif électronique vestimentaire ;
à réguler à la baisse la valeur du courant de charge du dispositif électronique vestimentaire, en fonction de l'instruction actuelle de régulation à la baisse du courant, de manière que le dispositif électronique vestimentaire soit chargé selon la valeur de courant qui a été réduite ;
à mesurer le temps à partir du point temporel où la valeur du courant de charge électrique du dispositif électronique vestimentaire est réduite, pour obtenir une durée actuelle de réduction de courant ; et
lorsque la durée actuelle de réduction de courant est égale au seuil de durée qui est préréglé par l'unité de réglage de seuil de durée, si la valeur de température qui est surveillée en temps réel par l'unité de surveillance de température (903) se situe toujours dans la plage de températures, en fonction de coefficients de régulation à la baisse du courant d'un niveau suivant, qui sont utilisés à un niveau suivant, à engendrer une instruction de régulation à la baisse du courant d'un niveau suivant, et à continuer de réguler à la baisse la valeur du courant de charge du dispositif électronique vestimentaire.

6. Appareil selon la revendication 5, **caractérisé en ce que** l'unité de surveillance de température (903) est spécifiquement destinée à recueillir en temps réel la valeur de tension d'une thermistance qui est électriquement connectée à une batterie du dispositif électronique vestimentaire ; et à calculer une valeur actuelle de résistance de la thermistance en fonction de la valeur de tension de la thermistance, et selon une relation de correspondance entre la valeur de résistance et la température, à obtenir la valeur de température de la batterie du dispositif électronique vestimentaire.

7. Appareil selon la revendication 5, **caractérisé en ce que** l'unité de régulation de courant (905) est destinée en outre, lorsque la durée actuelle de réduction de courant est égale au seuil actuel de durée qui est préréglé par l'unité de réglage de seuil de durée, si la valeur de température qui est surveillée en temps réel par l'unité de surveillance de température (903) se situe toujours dans la plage de températures, à réaliser une commande pour mettre hors tension la bobine de réception sans fil du dispositif électronique vestimentaire ;
l'appareil (90) comprend en outre : une unité de définition de nombre seuil de réductions de courant destinée à définir un nombre seuil de réductions de courant ou la valeur la plus basse de l'unité de réglage de courant de charge pour régler la valeur la plus basse du courant de charge ; et
l'unité de régulation de courant (905) est destinée, en cas de régulation à la baisse progressive en plusieurs fois de la valeur du courant de charge du dispositif électronique vestimentaire, à cumuler le nombre de réductions de courant, et si le nombre cumulé de réductions de courant atteint le nombre seuil de réductions de courant qui est défini par l'unité de définition de nombre seuil de réductions de courant, et que la valeur de température qui est surveillée en temps réel par l'unité de surveillance de température (903) se situe toujours dans la plage de températures, à réaliser une commande de mise en hors tension de la bobine de réception sans fil du dispositif électronique vestimentaire ; ou l'unité de régulation de courant (905) est destinée, en cas de régulation à la baisse progressive en plusieurs fois de la valeur du courant de charge du dispositif électronique vestimentaire, si la valeur actuelle du courant de charge n'est pas supérieure à la valeur la plus basse du courant de charge qui est définie par la valeur la plus basse de l'unité de réglage de courant de charge, et que la valeur de température qui est surveillée en temps réel par l'unité de surveillance de température (903) se situe toujours dans la plage de températures, à réaliser une commande pour mettre hors tension la bobine de réception sans fil du dispositif électronique vestimentaire.

8. Appareil selon la revendication 7, **caractérisé en ce que** la définition d'un ou de plusieurs coefficient(s) de régulation à la baisse du courant par niveaux comprend : la définition d'un coefficient de régulation à la baisse du courant d'un premier niveau, dans lequel le coefficient de régulation à la baisse du courant d'un premier niveau est une valeur numérique qui est inférieure à 1 ;
la génération d'une instruction de régulation à la baisse du courant à des fins d'utilisation actuelle selon un coefficient correspondant de régulation à la baisse du courant par niveaux comprend :
lorsque le coefficient de régulation à la baisse du courant par niveaux à des fins d'utilisation actuelle est le coefficient de régulation à la baisse du courant d'un premier niveau, la définition d'une valeur de produit du coefficient de régulation à la baisse du courant d'un premier niveau et de la valeur prédéfinie de courant de charge à courant constant dans l'instruction de régulation à la baisse du courant à des fins d'utilisation actuelle, pour indiquer que la valeur du courant de charge après réduction de courant du niveau actuel est la valeur de produit ;
la définition d'un ou de plusieurs coefficient(s) de régulation à la baisse du courant par niveaux comprend : la définition d'un coefficient de régulation à la baisse du courant d'un premier niveau et d'un coefficient de régulation à la baisse du courant d'un second niveau, dans lequel le coefficient de régulation à la baisse du courant d'un premier niveau et le coefficient de régulation à la baisse du courant d'un second niveau sont tous deux des valeurs numériques qui sont inférieures à 1 ; et
la génération d'une instruction de régulation à la baisse du courant d'un niveau suivant, en fonction de coefficients de régulation à la baisse du courant d'un niveau suivant, qui sont utilisés à un niveau suivant, comprend :
lorsque les coefficients de régulation à baisse du courant d'un niveau suivant, qui sont utilisés à un niveau suivant comprennent le coefficient de régulation à la baisse du courant d'un premier niveau et le coefficient de régulation à la baisse du courant d'un second niveau, la définition d'une valeur de produit du coefficient de régulation à la baisse du courant du second niveau et du coefficient de régulation à la baisse du courant du premier niveau et de la valeur définie de courant de charge à courant constant, dans l'instruction de régulation à la baisse du courant d'un niveau suivant, pour indiquer que la valeur du courant de charge après réduction de courant du niveau suivant est la valeur de produit.

9. Montre intelligente, **caractérisée en ce que** la montre intelligente est pourvue de l'appareil de commande de charge pour dispositif électronique vestimentaire selon l'une quelconque des revendications 5 à 8, et l'appareil destiné à commander la charge permet à une valeur de température de la montre intelligente, lorsqu'elle est en cours de charge dans un mode sans fil, de se situer dans une plage préréglée de températures.
